# DEMANDE DE BREVET EUROPEEN

(11) **EP 1 762 944 A1**
(43) Date de publication de la demande: **14.03.2007**
(21) Numéro de dépôt: 06290549.2
(22) Date de dépôt: 05.04.2006
(51) Int. Cl.: G06F 13/42, G06F 5/06, G06F 15/76

(54) **Système et procédé de communication asynchrone sur circuit, entre des sous-circuits synchrones.**

(30) Priorité: 12.09.2005 FR 0509279
(71) Demandeur: ARTERIS, 75008 Paris (FR)
(72) Inventeur: Douady, César, 91400 Orsay (FR); Boucard, Philippe, 78150 Le Chesnay (FR); Montperrus, Luc, 78180 Montigny-le-Bretonneux (FR)
(74) Mandataire: Zapalowicz, Francis

(57) **Abrégé**

Le système de communication asynchrone sur circuit, entre des sous-circuits synchrones, comprend un premier sous-circuit synchrone (SC1) cadencé par une première fréquence d'horloge (H₁), qui émet des requêtes à destination d'un deuxième sous-circuit synchrone (SC2) cadencé par une deuxième fréquence d'horloge (H₂). Le premier sous-circuit (SC1) transmet des données au deuxième sous-circuit (SC2) par un premier lien de communication unidirectionnelle mésochrone (LCUM1), et le deuxième sous-circuit (SC2) transmet des informations (IDE) de disponibilité d'un emplacement élémentaire de mémoire supplémentaire dans la file d'attente (FIFO1) située en bout du premier lien de communication unidirectionnelle mésochrone (LCUM1) au premier sous-circuit (SC1) par un deuxième lien de communication unidirectionnelle mésochrone (LCUM2). Le premier sous-circuit (SC1) comprend des moyens de transmission (REG1) pour transmettre directement audit deuxième sous-circuit (SC2) des données d'une taille au plus égale à la taille correspondant aux emplacements élémentaires de mémoire disponibles dans ladite file d'attente (FIFO1).

## Description

La présente invention porte sur un système et un procédé de communication asynchrone sur circuit, entre des sous-circuits synchrones.

Les technologies submicroniques permettent d'intégrer un nombre croissant de fonctionnalités sur une même puce de silicium, et d'obtenir ainsi de véritables systèmes complets, ou "System on Chip" en langue anglaise. Dans de tels systèmes, il est nécessaire de gérer les problèmes de communication entre les différents sous-circuits.

Des solutions utilisant un bus de communication ou un réseau de communication existent.

Lorsqu'on utilise un bus de communication, des liaisons généralement bidirectionnelles sont partagées par plusieurs agents ou éléments de communication qui utilisent à tour de rôle des ressources communes.

Lorsqu'on utilise un réseau de communication, les connexions sont généralement des connexions unidirectionnelles point à point, reliant les agents directement entre eux, ou par l'intermédiaire d'éléments de commutation. L'arbitrage est effectué dans les éléments de commutation au moyen de tables de routage. L'interopérabilité est assurée par diverses interfaces spécifiques.

La réalisation de tels systèmes sur silicium pose plusieurs problèmes, notamment dus à la limitation du fonctionnement des outils de conception assistée par ordinateur, ainsi qu'à l'évolution rapide de la vitesse des portes logiques par rapport à l'évolution de la vitesse de transmission des signaux dans les fils. Par conséquent, la transmission d'informations sur des distances significatives est un problème critique.

En outre, il est difficile, sur de tels systèmes, de maintenir la cohérence des horloges, et la dispersion des horloges est inévitable. Il devient extrêmement difficile, voire impossible, de maintenir un système complet entièrement synchrone. Il est alors possible d'utiliser des systèmes de type globalement asynchrone et localement synchrone, ou GALS, pour lesquels le système est partagé en plusieurs sous-systèmes synchrones de tailles raisonnables et communiquant entre eux de manière asynchrone.

Les systèmes de type globalement asynchrone et localement synchrone utilisent généralement, pour leur protocole de communications globales asynchrones, des accusés de réception, encore appelés protocole de "hand shaking" en langue anglaise.

Lorsqu'un sous-circuit émetteur et un sous-circuit récepteur sont respectivement prêts à émettre et recevoir des données, l'émetteur envoie une information, puis le récepteur reçoit l'information et envoie un accusé de réception, ou acquittement, pour signifier qu'il a bien reçu l'information. L'émetteur envoie alors un signal d'initialisation au récepteur, signifiant que l'émetteur est prêt à envoyer l'information, et le récepteur retourne à l'émetteur une information, signifiant qu'il est prêt à recevoir.

De tels systèmes génèrent de la latence dans la transmission des données entre sous-sytèmes synchrones, et exploitent mal la bande passante disponible.

Un but de l'invention est d'optimiser l'utilisation de la bande passante disponible entre deux sous-systèmes synchrones.

L'invention a également pour but de faciliter et de diminuer le coût de réalisation et de test de tels circuits.

Ainsi, selon un aspect de l'invention, il est proposé un système de communication asynchrone sur circuit, entre des sous-circuits synchrones. Le système comprend un premier sous-circuit synchrone cadencé par une première fréquence d'horloge, adapté pour émettre des requêtes à destination d'un deuxième sous-circuit synchrone cadencé par une deuxième fréquence d'horloge. Ledit premier sous-circuit transmet des données audit deuxième sous-circuit par un premier lien de communication unidirectionnelle mésochrone, et ledit deuxième sous-circuit transmet des informations audit premier sous-circuit par un deuxième lien de communication unidirectionnelle mésochrone . Ledit premier lien de communication unidirectionnelle mésochrone comprend une mémoire organisée en file d'attente située en fin de communication dudit premier lien. Un emplacement élémentaire de mémoire de ladite file d'attente a une taille prédéterminée. Ledit deuxième sous-circuit synchrone comprend des moyens d'émission pour transmettre audit premier sous-circuit une information de disponibilité d'un emplacement élémentaire de mémoire supplémentaire dans ladite file d'attente, dès qu'un emplacement élémentaire de mémoire de ladite file d'attente est lu par ledit deuxième sous-système. Ledit premier sous-circuit comprend des moyens de transmission pour transmettre directement audit deuxième sous-circuit des données d'une taille au plus égale à la taille correspondant aux emplacements élémentaires de mémoire disponibles dans ladite file d'attente.

Une requête est un transfert unidirectionnel d'informations.

Un tel système permet d'optimiser l'utilisation de la bande passante entre deux sous-circuits synchrones, ainsi que de réduire la latence du système.

En outre, un tel système à un coût réduit de réalisation et de validation.

Dans un mode de réalisation préféré, ledit premier sous-circuit comprend des moyens de détermination du nombre d'emplacements élémentaires de mémoire disponibles, à partir desdites informations de disponibilité.

Le premier sous-circuit sait donc à tout instant, la quantité de données qu'il peut transmettre au deuxième sous-circuit en fonction de la taille mémoire disponible dans la file d'attente.

En d'autres termes, le premier sous-circuit peut transmettre successivement plusieurs paquets de données à destination du deuxième sous-circuit, sans avoir à attendre, entre deux émissions de paquets de données, une information du deuxième sous-circuit indiquant qu'il peut recevoir le paquet suivant de données à transmettre. L'utilisation de la bande passante est donc optimisée.

Dans un mode de réalisation avantageux, ladite file d'attente est cadencée en écriture par ladite première fréquence d'horloge, et cadencée en lecture par ladite deuxième fréquence d'horloge.

Dans un mode de réalisation préféré, la file d'attente comprend un nombre d'emplacements élémentaires de mémoire au moins égal au nombre de cycles de ladite horloge ayant la fréquence de cadencement la plus faible, permettant un transfert de données du premier sous-système au deuxième sous-système et la transmission du deuxième sous-système au premier sous-système d'une information de disponibilité d'un emplacement élémentaire de mémoire supplémentaire dans ladite file d'attente.

La taille de la file d'attente est alors optimisée, afin d'éviter les problèmes d'augmentation de latence.

Par exemple, un lien de communication unidirectionnelle mésochrone comprend des moyens de synchronisation intermédiaire des données transmises par ledit lien.

En effet, il peut être nécessaire de resynchroniser les données transmises sur le lien de communication unidirectionnelle mésochrone, lorsque la longueur du lien le nécessite.

En outre, une pluralité de liens de communication unidirectionnelle mésochrone, de même direction, peuvent avoir une fréquence de cadencement d'horloge transmise en commun.

Le nombre de signaux de cadencements d'horloges à transmettre est alors nettement diminué, car on peut en transmettre un seul commun à une pluralité de liens.

En outre, le système comprend des moyens de test du système par un dispositif de génération de vecteurs de test. Lesdits moyens de test comprennent des moyens pour rendre les files d'attente synchrones.

Le système globalement asynchrone et localement synchrone peut alors être testé, et ce au moyen d'outils existants, tels des générateurs de vecteurs de test ou "ATPG" en abréviation en langue anglaise.

Avantageusement, le système comprend en outre des moyens d'arrêt/démarrage desdits premier et deuxième sous-circuits. Lesdits moyens d'arrêt/démarrage comprennent des moyens d'envoi d'une information représentative de l'activité d'un desdits sous-circuits conjointement à l'information respective représentative de la fréquence de cadencement d'horloge dudit sous-circuit. Lesdits moyens d'arrêt/démarrage comprennent également des moyens pour remettre à zéro ledit nombre déterminé d'emplacements élémentaires de mémoire disponibles dans la file d'attente du deuxième sous-circuit lorsque ledit premier sous-circuit ou ledit deuxième sous-circuit devient inactif, et des moyens pour émettre le nombre d'informations de disponibilité correspondant au nombre d'emplacements élémentaires de mémoire disponibles dans la file d'attente, lorsque lesdits premier et deuxième sous-circuits sont à nouveau tous deux actifs.

On peut ainsi gérer une réinitialisation partielle ou totale du système, et réduire sa consommation.

Selon un autre aspect de l'invention, il est également proposé un procédé de communication asynchrone sur circuit, entre des sous-circuits synchrones. Le circuit comprend un premier sous-circuit synchrone cadencé par une première fréquence d'horloge et émettant des requêtes à destination d'un deuxième sous-circuit synchrone cadencé par une deuxième fréquence d'horloge. Ledit premier sous-circuit transmet des données audit deuxième sous-circuit par un premier lien de communication unidirectionnelle mésochrone, et ledit deuxième sous-circuit transmet des informations audit premier sous-circuit par un deuxième lien de communication unidirectionnelle mésochrone. Ledit premier lien de communication unidirectionnelle mésochrone comprend une mémoire organisée en filé d'attente et disposée en fin de communication du lien. Un emplacement élémentaire de mémoire de ladite file d'attente a une taille prédéterminée. On transmet audit premier sous-circuit une information de disponibilité d'un emplacement élémentaire de mémoire supplémentaire dans ladite file d'attente, dès qu'un emplacement élémentaire de mémoire de ladite file d'attente est lu par ledit deuxième sous-circuit. On transmet directement dudit premier sous-circuit audit deuxième sous-circuit des données d'une taille au plus égale à la taille correspondant aux emplacements élémentaires de mémoire disponibles dans la file d'attente.

Il est possible d'effectuer une partition d'un gros sous-système en petits sous-systèmes de dimension raisonnable pour les outils de conception assistée par ordinateur, tout en évitant d'avoir à gérer ou budgétiser les contraintes de temps du système ("time budgeting" en langue anglaise). La gestion ou budgétisation des contraintes de temps est remplacée par la mesure du déphasage ou dispersion entre différents signaux des liens mésochrones ("skew" en langue anglaise), ce qui est plus aisé à effectuer.

Budgetiser des contraintes de temps signifie répartir une contrainte de temps de cycle entre le chemin qui part d'une bascule émettrice d'un premier sous-circuit, le chemin qui relie le premier sous-circuit au deuxième sous-circuit, et le chemin qui arrive à une bascule réceptrice du deuxième sous-circuit. Cette répartition est généralement estimée au début de la conception, et est affinée lorsque les résultats de synthèse du circuit sont affinés, ce qui entraîne souvent d'importants problèmes en fin de conception.

L'invention permet donc de passer d'une contrainte sur un temps de cycle à une contrainte de dispersion de fronts simplifiée, plus facile à réaliser et plus facilement ajustable par une légère augmentation de la latence, sans modifier la fréquence de cadencement d'horloge.

Avantageusement, on teste le circuit par un dispositif de génération de vecteurs de test, en rendant les files d'attente synchrones.

En outre, on peut gérer l'arrêt/démarrage desdits premier et deuxième sous-circuits en envoyant une information représentative de l'activité d'un desdits sous-circuits conjointement à l'information respective représentative de la fréquence de cadencement d'horloge dudit sous-circuit, en remettant à zéro ledit nombre déterminé d'emplacements élémentaires de mémoire disponibles dans la file d'attente du deuxième sous-circuit lorsque ledit premier sous-circuit ou ledit deuxième sous-circuit devient inactif, et en émettant le nombre d'informations de disponibilité correspondant au nombre d'emplacements élémentaires de mémoire disponibles dans ladite file d'attente, lorsque lesdits premier et deuxième sous-circuits sont à nouveau tous deux actifs.

Il est également proposé, selon un aspect de l'invention, une utilisation d'un procédé tel que décrit précédemment, pour effectuer une partition hiérarchique de gros circuits en petits sous-circuits avec une synthèse logique simplifiée du circuit.

D'autres buts, caractéristiques et avantages de l'invention apparaîtront à la lecture de la description suivante, donnés à titre d'exemples non limitatifs, et faite en référence aux dessins annexés, sur lesquels :
- la figure 1 illustre un mode de réalisation d'un système selon un aspect de l'invention ;
- la figure 2 est une vue schématique d'une émission de données sur un front montant de signal d'horloge avec échantillonnage des données en réception sur le front descendant dudit signal d'horloge ;
- la figure 3 est une vue schématique d'un mode de réalisation de la file d'attente à deux domaines d'horloge selon un aspect de l'invention ;
- la figure 4 est une vue schématique d'un lien de communication unidirectionnelle mésochrone comprenant des synchronisations intermédiaires selon un aspect de l'invention ;
- la figure 5 est une vue schématique d'un mode de réalisation d'un système selon un aspect de l'invention, avec mises en commun de fréquences de cadencement d'horloges ;
- les figures 6 et 7 illustrent le partitionnement d'un système en plusieurs sous-circuits synchrones selon un aspect de l'invention ; et
- la figure 8 est une vue schématique de moyens de test du système selon un aspect de l'invention.

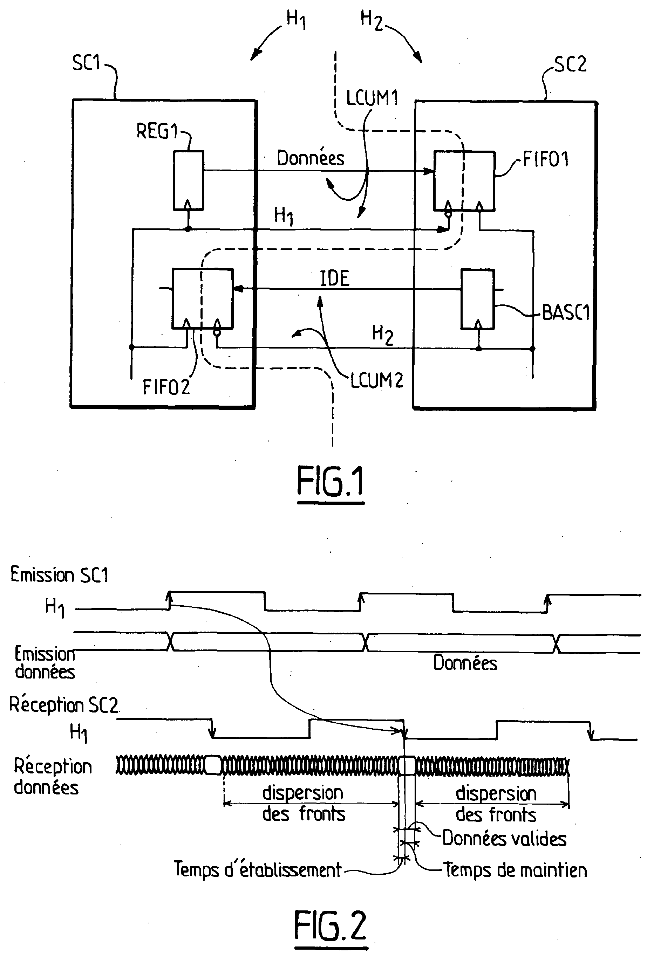

Sur la figure 1, sont représentés deux sous-circuits synchrones SC1, SC2 d'un système de communication asynchrone. Le premier sous-circuit SC1 comprend un registre REG1 et une mémoire organisée en file d'attente FIF02. Le deuxième sous-circuit SC2 comprend une mémoire organisée en file d'attente FIFO1 et une bascule ou flip-flop BASC1.

Un premier lien de communication unidirectionnelle mésochrone LCUM1 relie le registre REG1 et la file d'attente FIFO1. Un deuxième lien de communication unidirectionnelle mésochrone LCUM2 relie la bascule BASC1 à la file d'attente FIFO2.

Le premier sous-circuit synchrone SC1 est cadencé par une première fréquence d'horloge H₁, et émet des requêtes à destination du deuxième sous-circuit synchrone SC2 cadencé par une deuxième fréquence d'horloge H₂.

La file d'attente FIFO2 et le registre REG1 partagent le même signal de première fréquence de cadencement d'horloge, et la file d'attente FIFO1 et la bascule BASC1 partagent le même signal de deuxième fréquence de cadencement d'horloge.

Le premier sous-circuit SC1 transmet des données au deuxième sous-circuit SC2 par le premier lien de communication unidirectionnelle mésochrone LCUM1. Les données transmises représentent, par exemple, des informations ou des données de contrôle.

Le deuxième sous-circuit SC2 transmet des informations au premier sous-circuit SC1 par le deuxième lien de communication unidirectionnelle mésochrone LCUM2.

Le premier lien de communication unidirectionnelle mésochrone LCUM1 est muni de la mémoire organisée en file d'attente FIFO1 en son extrémité du deuxième sous-circuit SC2. La file d'attente FIFO1 comprend une pluralité d'emplacements élémentaires de mémoire de taille prédéterminée.

Les données émises sur le premier lien de communication unidirectionnelle mésochrone LCUM1 le sont à partir du registre REG1.

En outre, la première fréquence d'horloge H₁ est également transmise par le premier lien de communication unidirectionnelle mésochrone LCUM1.

La file d'attente FIFO1 est cadencée en écriture par la première fréquence d'horloge H₁, et cadencée en lecture par la deuxième fréquence d'horloge H₂.

Dès qu'un emplacement élémentaire de mémoire de la file d'attente FIFO1 est lu par le sous-circuit SC2, la bascule BASC1 du deuxième sous-circuit SC2 transmet une information IDE de disponibilité d'un emplacement élémentaire de mémoire supplémentaire dans ladite file d'attente FIFO1, à destination du premier sous-circuit SC1.

On entend par lire un emplacement élémentaire de mémoire d'une file d'attente, accéder au contenu de cet emplacement, et rendre disponible cet emplacement pour écriture.

L'information de disponibilité IDE est transmise par le deuxième lien de communication unidirectionnelle mésochrone LCUM2, ainsi que la deuxième fréquence d'horloge H₂ du deuxième sous-circuit SC2.

Le premier sous-circuit SC1 comprend un module de détermination du nombre N d'emplacements élémentaires de mémoire disponibles dans la file d'attente FIFO1, à partir des informations IDE de disponibilité transmises par le deuxième sous-circuit SC2. Le module de détermination du nombre N d'emplacements élémentaires de mémoire disponibles dans la file d'attente FIFO1 peut être, par exemple, un compteur, ou, comme représenté sur la figure 1, la mémoire organisée en file d'attente FIFO2, dont seule la partie de contrôle est utilisée pour déterminer le nombre N d'emplacements élémentaires de mémoire disponibles dans la file d'attente FIFO 1.

Ainsi, à tout instant, le premier sous-circuit synchrone SC1 connaît la quantité maximale de données qu'il peut transmettre directement à la file d'attente FIFO1 du deuxième sous-circuit synchrone SC2 sans attendre, entre chaque donnée envoyée, un acquittement en retour indiquant qu'il est possible de transmettre la donnée suivante.

La bande passante du premier lien de communication unidirectionnelle mésochrone LCUM1 est alors optimisée.

La figure 2 illustre une transmission de données sur le premier lien de communication unidirectionnelle mésochrone LCUM1. Le signal d'horloge H₁ à l'émission en début de ligne est représenté, ainsi que le signal d'horloge H₁ en réception en fin de ligne.

Les données sont émises sur des fronts montants du signal d'horloge H₁ et échantillonnées en réception sur des fronts descendants du signal d'horloge H₁.

Au cours de la transmission des données, les données transmises se dispersent autour d'une position moyenne correspondant au front d'émission de l'horloge H₁, ici le front montant, sous l'effet de la diaphonie.

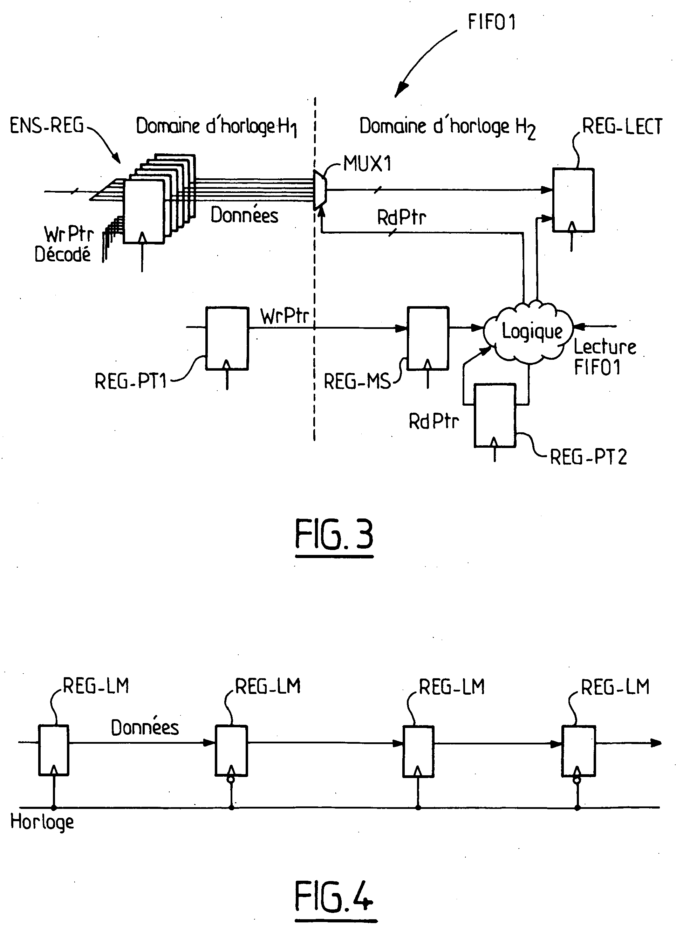

La figure 3 représente un exemple de réalisation de la file d'attente FIFO1. Une telle file d'attente, fonctionnant avec deux fréquences de cadencement d'horloge H₁ et H₂, permet de passer d'un domaine d'horloge H₁ à l'autre H₂ de manière asynchrone.

Un trait pointillé représente la séparation entre les deux domaines d'horloge H₁ et H₂. Le domaine d'horloge H₁ comprend un ensemble ENS_REG de registres et un registre REG_PT1.

Le domaine d'horloge H2 comprend un multiplexeur MUX1 relié en entrée à chacun des registres de l'ensemble ENS_REG de registres.

En outre, le domaine d'horloge H₂ comprend des éléments de logique, un registre REG_LECT, un registre REG_MS, et un registre REG_PT2. Le multiplexeur MUX1 est connecté au registre REG_LECT et aux éléments de logique. Les éléments de logique sont connectés au registre REG_LECT, au registre REG_MS, ainsi qu'au registre REG_PT2. Le registre REG_PT1 est connecté au registre REG_MS.

La file d'attente FIFO1 est cadencée en écriture par la première fréquence d'horloge H₁, et est cadencée en lecture par la deuxième fréquence d'horloge H₂.

La sélection des données à lire et à écrire dans la file d'attente FIFO1 est effectuée au moyen de deux pointeurs d'adresse : un premier pointeur d'adresse WrPtr pour l'écriture, et un deuxième pointeur d'adresse RdPtr pour la lecture. Les premier et deuxième pointeurs WrPtr et RdPtr étant incrémentés dans leur domaine d'horloge respectif, ils sont respectivement recopiés dans l'autre domaine.

Les données sont écrites dans l'ensemble de registres ENS_REG. Le registre REG_PT1 mémorise le premier pointeur WrPtr.

La gestion de la file d'attente FIFO1 pleine est faite au moyen d'un mécanisme d'informations IDE représentatives d'un emplacement disponible dans la file d'attente FIFO1. Il n'est pas nécessaire d'avoir une copie du deuxième pointeur RdPtr, car, au départ, le premier sous-circuit synchrone SC1 émetteur a un nombre limité Nmax d'emplacements élémentaires de mémoire disponibles dans la file d'attente FIFO1. Dès que le premier sous-circuit synchrone SC1 émet une donnée, il consomme un de ces emplacements élémentaires de mémoire disponibles, et lorsqu'il n'a plus d'emplacement disponible (N=0), il ne peut plus émettre de données à destination du deuxième sous-circuit SC2.

Lorsque la file d'attente FIFO1 est lue, un emplacement élémentaire de mémoire est libéré et devient disponible, et une information IDE de disponibilité d'un emplacement élémentaire de mémoire supplémentaire dans la file d'attente FIFO1 est alors envoyée au premier sous-circuit SC1 émetteur.

Le premier pointeur d'adresse WrPtr transite par le registre REG-MS lors de sa recopie de la première fréquence de cadencement d'horloge H₁ vers la deuxième fréquence de cadencement d'horloge H₂.

Le registre REG-PT2 permet de stocker le deuxième pointeur d'adresse RdPtr, et le registre REG-LECT permet de stocker la donnée lue dans la file d'attente FIFO1 à l'adresse du deuxième pointeur d'adresse RdPtr.

La figure 4 illustre la transmission de données par un lien de communication unidirectionnelle mésochrone sur de longues distances, avec des synchronisations intermédiaires effectuées au moyen des registres REG-LM, disposés en série sur le lien, et de la fréquence de cadencement d'horloge de l'émission transmise auxdits registres REG_LM alternativement inversée et non-inversée.

Entre deux synchronisations successives, le délai de propagation est identique pour chaque donnée, et pour le signal de cadencement d'horloge.

Quand les distances de transmission des données sur un lien de communication unidirectionnelle mésochrone sont importantes, une ou plusieurs synchronisations intermédiaires peuvent être nécessaires.

Cela permet de ne pas diminuer le débit sur un lien de transmission unidirectionnelle mésochrone, même lorsque celui-ci a une longueur importante. Cependant, les synchronisations intermédiaires augmentent la latence du transfert des données, et donc les tailles des files d'attente, qui doivent être augmentées en conséquence.

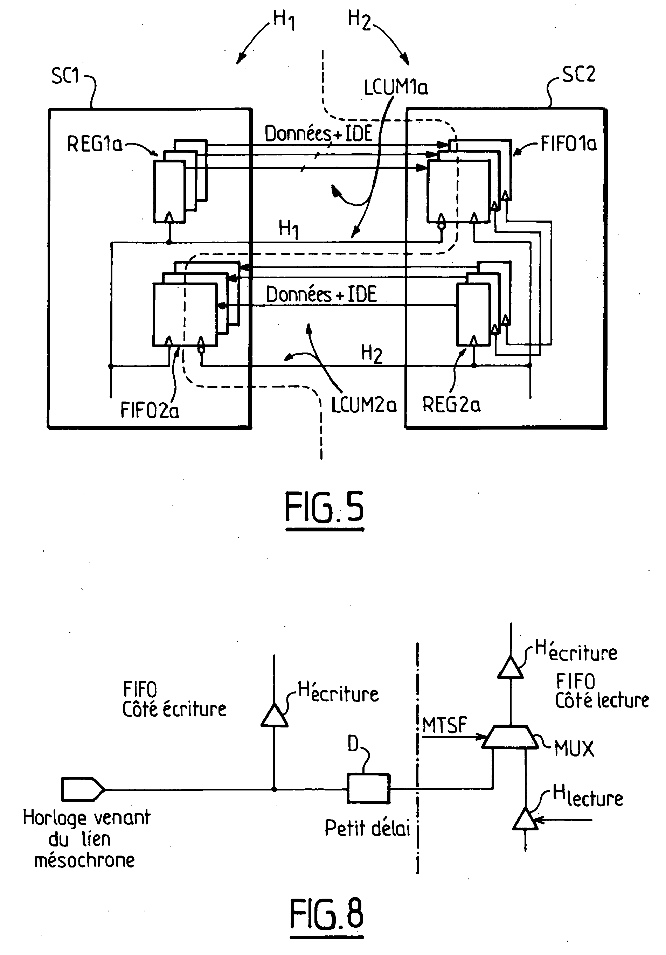

Sur la figure 5, une variante du système de la figure 1 est adaptée pour mettre en commun les fréquences de cadencement d'horloge.

Un ensemble LCUM1a de liens de communication unidirectionnelle mésochrone permet de transmettre les requêtes du premier sous-circuit SC1 au deuxième sous-circuit SC2, et les réponses à des requêtes du deuxième sous-circuit SC2 au premier sous-circuit SC1.

Un ensemble LCUM2a de liens de communication unidirectionnelle mésochrone permet de transmettre, du deuxième sous-circuit SC2 au premier sous-circuit SC1, les réponses auxdites requêtes du premier sous-circuit SC1 au deuxième sous-circuit SC2, et les requêtes du deuxième sous-circuit SC2 au premier sous-circuit SC1.

Le premier sous-circuit SC1 comprend une pluralité de registres REG1a pour transmettre des requêtes et des informations de disponibilité des réponses au deuxième sous-circuit SC2.

Chaque lien de communication unidirectionnelle mésochrone de l'ensemble LCUM1a se termine respectivement par une mémoire organisée en file d'attente, appartenant à un ensemble de files d'attente FIFO1a.

Le deuxième sous-circuit SC2 est également muni d'une pluralité REG2a de registres pour émettre, du deuxième sous-circuit SC2 au premier sous-circuit SC1, les réponses aux requêtes et les informations de disponibilité des emplacements élémentaires de mémoire des files d'attentes de l'ensemble FIFO1a, par les liens de communication unidirectionnelle mésochrones respectifs de l'ensemble LCUM2a.

Chaque lien de communication unidirectionnelle mésochrone de l'ensemble LCUM2a comprend une mémoire organisée en file d'attente, appartenant à un ensemble de files d'attente FIFO2a.

Le mode de réalisation permet de mettre en commun pour plusieurs liens mésochrones, le transfert des fréquences de cadencement d'horloge H₁ et H₂.

En effet, sur cet exemple, une seule fréquence d'horloge H₁ est transmise pour l'ensemble LCUM1a de liens de communication unidirectionnelle mésochrone, et une seule fréquence d'horloge H₂ est transmise pour l'ensemble LCUM2a de liens de communication unidirectionnelle mésochrone.

Les signaux d'horloge sont plus protégés et consomment plus d'énergie que les autres signaux. Les partager réduit le coût de réalisation et la consommation énergétique du circuit.

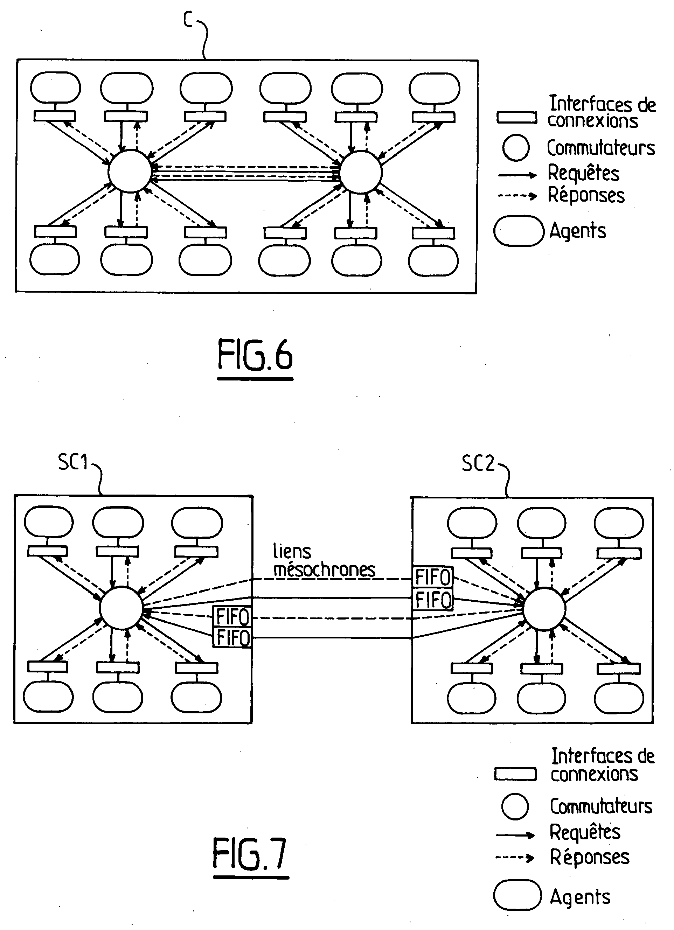

Les figures 6 et 7 illustrent le partitionnement d'un circuit C en plusieurs sous-circuits SC1, SC2 communiquant entre eux avec des liaisons mésochrones terminées par des files d'attente.

Le circuit C de la figure 6 comprend deux commutateurs, chacun relié à six agents munis respectivement d'une interface de connexion avec le commutateur. Chaque commutateur communique avec un agent auquel il est relié, au moyen de deux liens unidirectionnels opposés reliant le commutateur et l'interface de connexion de l'agent.

En outre, chaque commutateur communique avec l'autre commutateur, au moyen de deux liens unidirectionnels de sens opposés.

La figure 7 représente deux sous-circuits synchrones SC1 et SC2.

Le premier sous-circuit SC1 comprend un commutateur relié à six agents munis respectivement d'une interface de connexion avec le commutateur. Le commutateur du premier sous-circuit SC1 communique avec un agent auquel il est relié, au moyen de deux liens unidirectionnels opposés reliant le commutateur et l'interface de connexion de l'agent.

Le deuxième sous-circuit SC2 comprend un commutateur relié à six agents munis respectivement d'une interface de connexion avec le commutateur. Le commutateur du deuxième sous-circuit SC2 communique avec un agent auquel il est relié, au moyen de deux liens unidirectionnels opposés reliant le commutateur et l'interface de connexion de l'agent.

Les commutateurs du premier sous-circuit SC1 et du deuxième sous-circuit SC2 sont reliés par des liens de communication unidirectionnelle mésochrone, de sens opposés, chaque lien comprenant en son extrémité une file d'attente.

L'invention permet de faire l'économie d'un outil coûteux de partition de circuit.

En effet, la gestion du temps implique une contrainte de dispersion, ou différence de temps de propagation ("delay skew" en langue anglaise), et peut être ajustée par action sur la latence.

Chaque partie peut être synthétisée indépendamment. Les registres d'émission pouvant être proches des connecteurs de sortie vers un lien mésochrone, la dispersion dans les sous-systèmes d'émission est très faible.

A la réception, comme la file d'attente est de petite taille, la dispersion est facilement maîtrisée et reste faible. Dans les sous-systèmes, on procède en deux étapes : lors d'une première étape, on contraint tous les chemins de manière à avoir une latence faible, et dans une deuxième étape, on ajoute un délai sur les chemins les plus rapides, pour réduire la dispersion.

La dispersion étant faible au niveau des sous-systèmes, elle est essentiellement présente dans les liens mésochrones, et quelle que soit la longueur du lien, il est possible d'effectuer des synchronisations intermédiaires, en contrepartie d'une augmentation de la latence.

Il est donc possible de connaître la latence du système, alors même, que les sous-circuits ne sont pas finalisés. On règle alors très tôt un problème qui classiquement est traité tardivement dans une phase de conception d'un circuit.

Le découpage du temps de cycle entre les différents sous-circuits et le système d'interconnexion global est replacé le contrôle de la diaphonie sur des liens mésochrone, ce qui est plus simple.

On obtient donc un circuit constitué de plusieurs sous-circuits synchrones, ayant une taille acceptable pour des outils de conception assistés par ordinateur, et qui communiquent entre eux par des liens mésochrones terminés par des files d'attente asynchrones, en utilisant le même protocole de communication, aussi bien sur les liens synchrones que sur les liens asynchrones.

La figure 8 illustre un module de test permettant de tester le circuit obtenu, en synchronisant la partie lecture de la file d'attente sur la partie écriture.

Au signal de fréquence de cadencement d'horloge H_{écriture} transmis par un lien de communication unidirectionnelle mésochrone, après transmission à la partie écriture de la file d'attente, un délai D est ajouté. Le signal, avec petit délai D, est transmis à un multiplexeur MUX recevant également un signal de fréquence de cadencement d'horloge H_{lecture} en écriture pour la file d'attente. Le multiplexeur reçoit également, en entrée, un information MTSF (Mode de Test FIFO Synchrone), représentative de l'activation ou non du mode de test.

Le cadencement d'horloge H_{écriture} transmis par le lien mésochrone est utilisé pour l'écriture dans la file d'attente.

Le multiplexeur MUX sélectionne, lorsqu'une information MTSF a une valeur prédéterminée, le signal de cadencement d'horloge en écriture H_{écriture} avec délai D pour la lecture de la file d'attente, au lieu du signal de cadencement d'horloge de lecture H_{lecture}.

En outre, une information supplémentaire pour chaque horloge peut être transmise dans les données, pour indiquer l'état du sous-système qui a émis cette horloge. Par exemple, ce signal peut valoir zéro lorsque l'émetteur du signal de cadencement d'horloge est inactif, et un dans le cas contraire.

Ce signal, modifié très rarement, est pseudo-statique et asynchrone. Il permet de pouvoir arrêter et redémarrer proprement tous les liens de communication vers les zones restées indisponibles, lorsqu'il est nécessaire de stopper une partie du système.

Si, par exemple, on décide d'arrêter un sous-circuit A, ledit signal émis par A va passer à zéro. Lorsque le sous-système B détecte que ce signal est passé à zéro, il remet à zéro le nombre déterminé N d'emplacements élémentaires de mémoire disponibles, et ne peut donc plus émettre de données vers A.

Lorsque le sous-circuit A est redémarré, si le sous-circuit B est lui-même disponible, il détecte ledit signal indiquant que le sous-circuit A est à nouveau actif, et envoie alors à destination du sous-circuit A un nombre d'informations de disponibilité d'un emplacement élémentaire de mémoire supplémentaire IDE égal au nombre d'emplacements élémentaires de mémoire disponibles dans sa file d'attente de réception.

Dès que le sous-circuit A reçoit une information de disponibilité IDE, il peut commencer à émettre des données en direction du sous-circuit B.

Il est alors possible d'arrêter et de redémarrer un sous-système sans perturber le fontionnement de l'ensemble

L'invention permet donc notamment d'optimiser la consommation d'énergie dans un système de communication.

## Revendications

1. Système de communication asynchrone sur circuit, entre des sous-circuits synchrones, **caractérisé par le fait que** :
le système comprend un premier sous-circuit synchrone (SC1) cadencé par une première fréquence d'horloge (H₁), adapté pour émettre des requêtes à destination d'un deuxième sous-circuit synchrone (SC2) cadencé par une deuxième fréquence d'horloge (H₂), ledit premier sous-circuit (SC1) transmettant des données audit deuxième sous-circuit (SC2) par un premier lien de communication unidirectionnelle mésochrone (LCUM1), et ledit deuxième sous-circuit (SC2) transmettant des informations audit premier sous-circuit (SC1) par un deuxième lien de communication unidirectionnelle mésochrone (LCUM2) ;
ledit premier lien de communication unidirectionnelle mésochrone (LCUM1) comprend une mémoire organisée en file d'attente (FIFO1) située en fin de communication dudit premier lien (LCUM1), un emplacement élémentaire de mémoire de ladite file d'attente (FIFO1) ayant une taille prédéterminée ;
ledit deuxième sous-circuit synchrone (SC2) comprend des moyens d'émission (BASC1) pour transmettre audit premier sous-circuit (SC1) une information (IDE) de disponibilité d'un emplacement élémentaire de mémoire supplémentaire dans ladite file d'attente (FIFO1), dès qu'un emplacement élémentaire de mémoire de ladite file d'attente (FIFO1) est lu par ledit deuxième sous-système (SC2) ; et
ledit premier sous-circuit (SC1) comprend des moyens de transmission (REG1) pour transmettre directement audit deuxième sous-circuit (SC2) des données d'une taille au plus égale à la taille correspondant aux emplacements élémentaires de mémoire disponibles dans ladite file d'attente (FIFO1).

2. Système selon la revendication 1, dans lequel ledit premier sous-circuit (SC1) comprend des moyens de détermination du nombre d'emplacements élémentaires de mémoire disponibles, à partir desdites informations de disponibilité.

3. Système selon la revendication 1 ou 2, dans lequel ladite file d'attente (FIFO1) est cadencée en écriture par ladite première fréquence d'horloge (H₁), et cadencée en lecture par ladite deuxième fréquence d'horloge (H₂).

4. Système selon l'une quelconque des revendications 1 à 3, dans lequel la file d'attente (FIFO1) comprend un nombre d'emplacements élémentaires de mémoire au moins égal au nombre de cycles de ladite horloge ayant la fréquence de cadencement la plus faible, permettant un transfert de données du premier sous-système (SC1) au deuxième sous-système (SC2), et la transmission du deuxième sous-système (SC2) au premier sous-système (SC1) d'une information (IDE) de disponibilité d'un emplacement élémentaire de mémoire supplémentaire dans ladite file d'attente (FIFO1).

5. Système selon l'une quelconque des revendications précédentes, dans lequel un lien de communication unidirectionnelle mésochrone comprend des moyens (REG_LM) de synchronisation intermédiaire des données transmises par ledit lien.

6. Système selon l'une quelconque des revendications précédentes, dans lequel une pluralité (LCUM1a, LCUM2a) de liens de communication unidirectionnelle mésochrone, de même direction, ont une fréquence de cadencement d'horloge (H₁, H₂) transmise en commun.

7. Système selon l'une quelconque des revendications précédentes, comprenant, en outre, des moyens de test du système par un dispositif de génération de vecteurs de test, lesdits moyens de test comprenant des moyens pour rendre les files d'attentes synchrones.

8. Système selon l'une quelconque des revendications 2 à 7, comprenant, en outre, des moyens d'arrêt/démarrage desdits premier (SC1) et deuxième (SC2) sous-circuits, lesdits moyens d' arrêt/démarrage comprenant des moyens d'envoi d'une information représentative de l'activité d'un desdits sous-circuits conjointement à l'information respective représentative de la fréquence de cadencement d'horloge dudit sous-circuit, des moyens pour remettre à zéro ledit nombre déterminé d'emplacements élémentaires de mémoire disponibles dans la file d'attente (FIFO1) du deuxième sous-circuit (SC2) lorsque ledit premier sous-circuit (SC1) ou ledit deuxième sous-circuit (SC2) devient inactif, et des moyens pour émettre le nombre d'informations (IDE) de disponibilité correspondant au nombre d'emplacements élémentaires de mémoire disponibles dans ladite file d'attente (FIFO1), lorsque lesdits premier et deuxième sous-circuits (SC1, SC2) sont à nouveau tous deux actifs.

9. Procédé de communication asynchrone sur circuit, entre des sous-circuits synchrones, **caractérisé par le fait que**,
le circuit comprenant un premier sous-circuit synchrone (SC1) cadencé par une première fréquence d'horloge (H₁) et émettant des requêtes à destination d'un deuxième sous-circuit synchrone (SC2) cadencé par une deuxième fréquence d'horloge (H₂), ledit premier sous-circuit (SC1) transmettant des données audit deuxième sous-circuit (SC2) par un premier lien de communication unidirectionnelle mésochrone (LCUM1), et ledit deuxième sous-circuit (SC2) transmettant des informations audit premier sous-circuit (SC1) par un deuxième lien de communication unidirectionnelle mésochrone (LCUM2),
ledit premier lien de communication unidirectionnelle mésochrone (LCUM1) comprenant une mémoire organisée en file d'attente (FIFO1) et disposée en fin de communication du lien (LCUM1), un emplacement élémentaire de mémoire de ladite file d'attente (FIFO1) ayant une taille prédéterminée,
on transmet audit premier sous-circuit (SC1) une information (IDE) de disponibilité d'un emplacement élémentaire de mémoire supplémentaire dans ladite file d'attente (FIFO1), dès qu'un emplacement élémentaire de mémoire de ladite file d'attente (FIFO1) est lu par ledit deuxième sous-circuit (SC2), et
on transmet directement dudit premier sous-circuit (SC1) audit deuxième sous-circuit (SC2) des données d'une taille au plus égale à la taille correspondant aux emplacements élémentaires de mémoire disponibles dans ladite file d'attente (FIFO1).

10. Procédé selon la revendication 9, dans lequel on teste le circuit par un dispositif de génération de vecteurs de test, en rendant les files d'attentes synchrones.

11. Procédé selon la revendication 9 ou 10, dans lequel on gère l'arrêt/démarrage desdits premier (SC1) et deuxième (SC2) sous-circuits, en envoyant une information représentative de l'activité d'un desdits sous-circuits conjointement à l'information respective représentative de la fréquence de cadencement d'horloge dudit sous-circuit, en remettant à zéro ledit nombre déterminé d'emplacements élémentaires de mémoire disponibles dans la file d'attente (FIFO1) du deuxième sous-circuit (SC2) lorsque ledit premier sous-circuit (SC1) ou ledit deuxième sous-circuit (SC2) devient inactif, et en émettant le nombre d'informations (IDE) de disponibilité correspondant au nombre d'emplacements élémentaires de mémoire disponibles dans ladite file d'attente (FIFO1), lorsque lesdits premier et deuxième sous-circuits (SC1, SC2) sont à nouveau tous deux actifs.

12. Utilisation d'un procédé selon l'une quelconque des revendications 9 à 11, pour effectuer une partition hiérarchique de gros circuits en petits sous-circuits avec une répartition de temps simplifiée.
